Europäisches Patentamt

European Patent Office

Office européen des brevets

(11) Veröffentlichungsnummer: **0 002 054**
**B1**

(19)

(12) **EUROPÄISCHE PATENTSCHRIFT**

(21) Anmeldenummer: **78101375.0**

(22) Anmeldetag: **15.11.78**

(51) Int. Cl.³: **F 27 B 7/20, C 04 B 7/44**

(54) Anlage zur Wärmebehandlung von feinkörnigem Gut

(30) Priorität: **23.11.77 DE 2752323**

(43) Veröffentlichungstag der Anmeldung:
**30.05.79 Patentblatt 79/11**

(45) Bekanntmachung des Hinweises auf die Patenterteilung:
**14.01.81 Patentblatt 81/02**

(84) Benannte Vertragsstaaten:
**CH DE FR GB**

(56) Entgegenhaltungen:
**DE - A - 2 416 528**
**FR - A - 2 272 359**
**GB - A - 1 451 057**

(73) Patentinhaber: **Krupp Polysius Aktiengesellschaft**
**Graf-Galen-Strasse 17**
**D - 4720 Beckum (DE)**

(72) Erfinder: **Ritzmann, Horst, Dipl.-Chem. Dr.**
**Riggenstrasse 4**
**D - 4735 Enniger (DE)**
**Bauer, Klaus, Ing. grad.**
**Von-Ketteler-Strasse 11**
**D - 4740 Oelde (DE)**
**Schmits, Heinz-Herbert, Ing. grad.**
**Berliner Strasse 6**
**D - 4840 Rheda-Wiedenbrück (DE)**
**Goldmann, Wolf, Dipl.-Ing.**
**Agnes-Miegel-Strasse 9**
**D - 4720 Beckum-Neubeckum (DE)**
**Korn, Henning, Ing. grad.**
**Vellerner Strasse 2**
**D - 4720 Beckum-Neubeckum (DE)**

(74) Vertreter: **Tetzner, Volkmar, Dr.-Ing. Dr. jur.**
**Van-Gogh-Strasse 3**
**D - 8000 München 71 (DE)**

Anlage zur Wärmebehandlung von feinkörnigem Gut

Die Erfindung betrifft eine Anlage zur Wärmebehandlung von feinkörnigem Gut, insbesondere zur Herstellung von Zement, mit einem mehrstufigen Zyklonvorwärmer, einem Drehrohrofen, einem Kühler sowie einer von der Ofenabgasleitung zwischen Drehrohrofen und Zyklonvorwärmer gebildeten, mit zusätzlichem Brennstoff versorgten Vorkalzinationszone, wobei eine an den Kühler angeschlossene, zur Vorkalzinationszone führende Kühlluftleitung in mehrere Kühlluftteilstrom-Leitungen aufgeteilt ist, die an verschiedenen Umfangsstellen in die Ofenabgasleitung einmünden.

Um bei der Wärmebehandlung von feinkörnigem Gut, insbesondere bei der Herstellung von Zement, den Drehrohrofen möglichst weitgehend von der für die Kalzination des Gutes erfoderlichen Wärmearbeit zu entlasten und ihn dadurch kleiner dimensionieren zu können, ist es bekannt, dem Drehrohrofen eine Vorkalzinationszone vorzuschalten, in der das bereits in mehreren Stufen des Vorwärmers vorgewärmte Gut noch weiter erhitzt (und dadurch weitgehend kalziniert) wird, ehe es anschließend in den Drehrohrofen gelangt. Dieser Vorkalzinationszone müssen Brennstoff und ein die Verbrennung ermöglichendes Verbrennungsmedium mit ausreichendem Sauerstoffgehalt zugeführt werden.

Es ist bekannt, der Vorkalzinationszone als gasförmiges Verbrennungsmedium entweder O₂-haltige Ofenabgase, einen vom Kühler der Anlage abgezogenen Kühlluftstrom oder ein Gemisch von Ofenabgasen und Kühlerluft zuzuführen. Die besondere Schwierigkeit bei dieser Vorkalzination besteht darin, den Wärmeinhalt des zusätzlichen Brennstoffes in kurzer Zeit, möglichst vollständig und gleichmäßig auf das Gut zu übertragen.

Bei bekannten Anlagen ("Zement-Kalk-Gips", 1970,250 sowie DE - A - 24 16 528) wird das in mehreren Stufen des Zyklonvorwärmers vorgewärmte, feinkörnige Gut, zusätzlicher Brennstoff sowie ein vom Kühler abgezogener Kühlluftstrom in die den Drehrohrofen mit dem Zyklonvorwärmer verbindende, von den Ofenabgasen durchströmte Gasleitung eingeführt. Diese Gasleitung bildet damit die eigentliche Vorkalzinationszone. Wegen der nicht optimalen Vermischung von Brennstoff, Gut, Kühlerluft und Ofenabgasen erweist es sich bei derartigen Anlagen als schwierig, innerhalb der zur Verfügung stehenden, sehr kurzen Zeit, in der das Gas-Brennstoff-Gut-Gemisch die Ofenabgasleitung durchströmt, eine ausreichende und gleichmäßige Wärmeübertragung vom Brennstoff auf das Gut zu erzielen.

Es ist weiterhin eine Anlage bekannt (FR—A—22 72 359), bei der die an den Kühler angeschlossene, zur Vorkalzinationszone führende Kühlluftleitung in zwei Küllluftteilstrom-Leitungen aufgeteilt ist, die schräg nach oben gerichtet, an gegenüberliegenden Umfangsstellen in die Ofenabgasleitung einmünden und in denen kurz vor der Einmündung zusätzliche Brenner angeordnet sind. Die Gutaustragsleitung der zweituntersten Stufe des Zyklonvorwärmers mündet etwas tiefer als die Kühlluftteilstrom-Leitungen in die Ofenabgasleitung ein. Nachteilig ist bei dieser Anlage, daß der in die Kühlluftteilstrom-Leitungen eingeführte zusätzliche Brennstoff bereits weitgehend verbrennt, ehe er in der Ofenabgasleitung mit dem vorgewärmten Gut in Berührung kommt. Die Wärmeübertragung erfolgt daher überwiegend nicht unmittelbar vom Brennstoff auf das Gut, sondern weitgehend auf dem Umweg über das Gas, was insbesondere wegen der kurzen zur Verfügung stehenden Zeit den Wirkungsgrad der Wärmeübertragung und die Gleichmäßigkeit der Vorkalzination beeinträchtigt.

Der Erfindung liegt daher die Aufgabe zugrunde, eine Anlage der eingangs genannten Art so auszubilden, daß mit geringem anlagentechnischen Aufwand für die Vorkalzinationszone eine möglichst vollständige und besonders gleichmäßige Wärmeübertragung vom Brennstoff auf das Gut erreicht wird.

Diese Augabe wird erfindungsgemäß dadurch gelöst, daß die Gutaustragsleitungen der zweituntersten Zyklonstufe in die Kühlluftteilstrom-Leitungen unmittelbar vor deren Anschluß an die Ofenabgasleitung einmünden und daß die Kühlluftteilstrom-Leitungen von des Einmündunpen der Gutaustrapsleitunpen bis zu den Anschlüssen an die Ofenabgasleitung um einen Winkel zwischen 20 und 60° in Strömungsrichtung nach unten gegenüber der Horizontalen geneigt sind.

Im Unterschied zu dem eingangs geschilderten Stand der Technik wird bei der erfindungsgemäßen Anlage das im Zyklonvorwärmer vorgewärmte Gut zunächst im Kühlluftstrom aufgelöst, ehe es durch diesen Kühlluftstrom in den Ofenabgasstrom eingetragen wird. Dadurch werden unerwünschte Gutzusammenballungen in der Ofenabgasleitung verhindert und in der Ofenabgasleitung ideale Vorbedingungen für eine gleichmäßige Wärmebehandlung aller Gutteilchen geschaffen.

Hierfür ist auch wesentlich, daß das vorgewärmte Gut auf zwei Kühlluftteilstrome aufgeteilt und das Gut-Kühlluft-Gemisch damit in zwei Teilströmen an unterschiedlichen Umfangsstellen in die Ofenabgasleitung eingeführt wird. Dadurch erzielt man eine sofortige, annähernd gleichmäßige Verteilung des Gutes über den gesamten Querschnitt der Ofenabgasleitung, d.h. über den ganzen Querschnitt der Vorkalzinationszone. Sorgt man dann noch für eine ebenfalls annähernd gleichmäßige Verteilung des Brennstoffes über diesen Querschnitt der Vorkalzinationszone, so ist eine rasche, vollständige und gleichmäßige Wärmeübertragung vom Brennstoff auf das Gut gewährleistet.

Indem die Kühlluftteilstrom-Leitungen von den Einmündungen der Gutaustragsleitungen bis zu den Anschlüssen an die Ofenabgasleitung um einen bestimmten Winkel in Strömungsrichtung nach unten gegenüber der Horizontalen geneigt sind, werden vor allem zwei wesentliche Effekte erreicht: Zum einen besitzen damit die beiden Teilströme des Kühlluft-Gut-Gemisches eine gewisse (abwärts gerichtete) Bewegungskomponente entgegen dem (aufwärts gerichteten) Ofenabgasstrom. Die sich dadurch einstellende Verwirbelung begünstigt die Vermischung von Gut, Brennstoff, Kühlluft und Ofenabgasen auf engstem Raum und fördert damit eine rasche Wärmeübertragung vom Brennstoff auf das Gut. Zum andern gewährleistet die leicht abwärts gerichtete Neigung der Kühlluftteilstrom-Leitungen in dem genannten Bereich zwischen den Einmündungen der Gutaustragsleitungen und den Anschlüssen an die Ofenabgasleitung, daß das in diese Leitungen eingetragene Gut bei einem etwaigen Ausfall der Kühlluftventilatoren unter der Wirkung der Schwerkraft von selbst in die Ofenabgasleitung fällt, so daß es nicht zu einer störenden und gefährlichen Verstopfung der Kühlluftteilstrom-Leitungen kommen kann.

Wird der genannte Neigungswinkel der Kühl-luftteilstrom-Leitungen innerhalb des angege-benen Bereiches gewählt, so wird dadurch einerseits verhindert, daß ein Teil der Ofenabgase in die Kühlluftteilstrom-Leitungen einströmt (was bei einem zu steilen Neigungswinkel der Fall sein kann); andererseits werden dadurch Verstopfungen, Materialablagerungen sowie schlechte Mischverhältnisse in den Kühlluftteilstrom-Leitungen vermieden (die bei einer zu flachen Neigung dieser Leitungen sich einstellen könnten).

Gemäß einer zweckmäßigen Ausgestaltung der Erfindung sind zwischen den Einmündungen der Gutaustragsleitungen und den Anschlüssen der Kühlluftteilstrom-Leitungen an die Ofenabgasleitung Einführstelle für zusätzlichen Brennstoff vorgesehen. Wird auf diese Weise nicht nur das vorgewärmte Gut, sondern zumindest auch ein Teil des zusätzlichen Brennstoffes in den Kühlluftteilstromen verteilt, ehe diese unmittelbar darauf in den Ofenabgasstrom eintreten, so wird die Strömungsenergie dieser Kühlluftteilstrome zugleich mit zur Verteilung des Brennstoffes ausgenutzt. Man erreicht dadurch eine ideale, gleichmäßige Verteilung von Gut, Brennstoff und gasförmigem Verbrennungsmedium in der Vorkalzinationszone.

Diese und zahlreiche weitere Merkmale der Erfindung gehen aus der folgenden Beschreibung eines in der Zeichnung veranschaulichten Ausführungsbeispieles hervor. Es zeigen

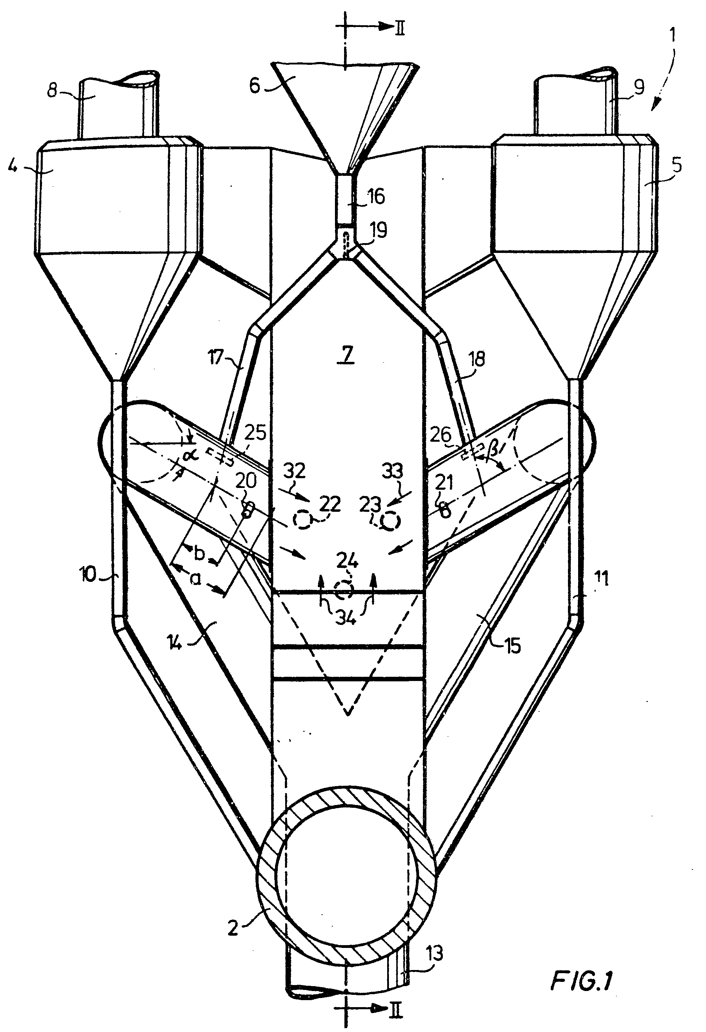

Fig. 1 eine Ansicht eines Teiles des Vorwärmers einer erfindungsgemäßen Anlage (gesehen vom Drehrohrofen her);

Fig. 2 einen Schnitt längs der Linie II—II der Fig. 1;

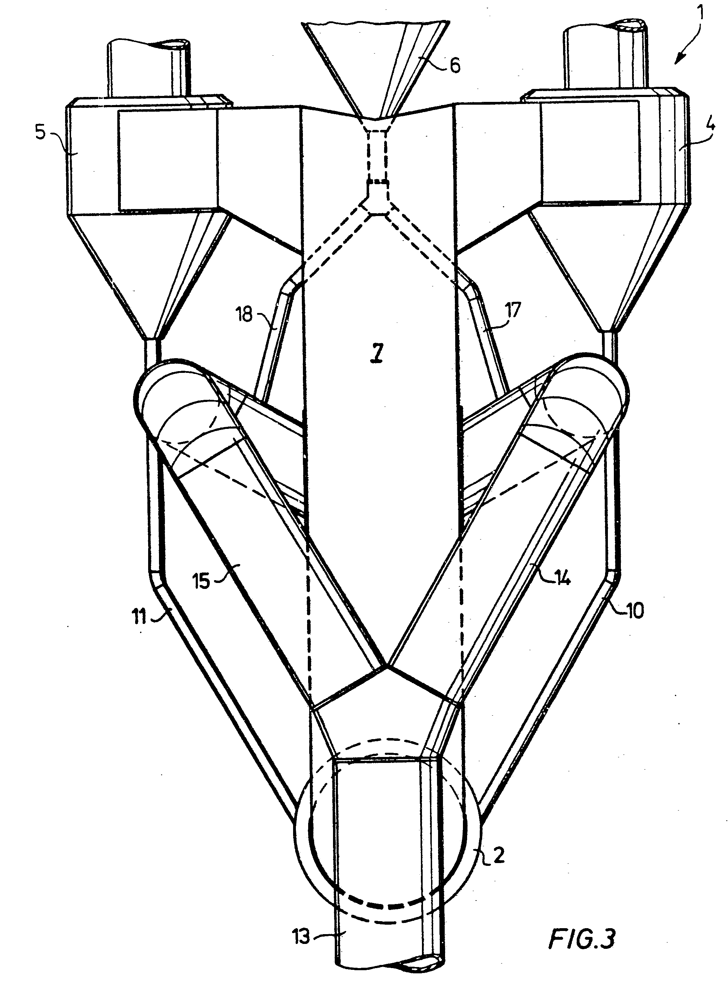

Fig. 3 eine Ansicht eines Teiles des Vorwärmers (gesehen aus der dem Drehrohrofen abgewandten Richtung).

Die in der Zeichnung veranschaulichte Anlage zur Wärmebehandlung von feinkörnigem Gut, insbesondere zur Herstellung von Zement, enthält, einen Zyklonvorwärmer 1 bekannter Bauweise, einen Drehrohrofen 2 und einen Kühler 3. Diese in ihrer allgemeinen Anordnung bekannten Anlagenteile sind teils schematisch, teils nur in Ausschnitten veranschaulicht.

Von dem mehrstufigen Zyklonvorwärmer 1 ist die aus den beiden Zyklonen 4 und 5 bestehende unterste Stufe und die vom Zyklon 6 gebildete zweit-unterste Stufe dargestellt. Der Drehrohrofen 2 steht über eine Ofenabgasleitung 7 mit den Zyklonen 4 und 5 in Verbindung, deren Abgasleitungen 8, 9 in bekannter Weise zum Zyklon 6 der nächsten Vor-wärmerstufe führen. Die Gutaustragsleitungen 10, 11 der Zyklone 4, 5 münden in das zum Drehrohrofen 2 führende Einlaufgehäuse 12.

Vom Kühler 3 führt eine Kühlluftleitung 13 zur Ofenabgasleitung 7. Diese Kühlluftleitung 13 verzweigt sich nahe der Ofenabgasleitung 7 in zwei Leitungen 14, 15, die zunächst schräg nach obenaußen geführt sind, dann schräg nach unten-innen laufen und an zwei einander diametral gegenüberliegenden Umfangsstellen in die Ofenabgasleitung 7 einmünden. Der schräg nach unten-innen laufende Teil der Leitungen 14, 15 ist gegenüber der Horizontalen um einen Winkel $\alpha$ zwischen 20 und 60°, vorzugsweise zwischen 30 und 50°, geneigt.

Die Gutaustragsleitung 16 des Zyklones 6 verzweigt sich in zwei Leitungen 17, 18, die in die Kühlluftteilstrom-Leitungen 14, 15 einmünden. An der Verzweigungstelle ist ein einstellbares Verteilerorgan 19 angeordnet.

Der Winkel $\beta$, den die Achse der Gutaustragsleitungen 17, 18 mit der Achse der zugehörigen Kühlluftteilstrom-Leitungen 14 bzw. 15 bildet (bei Betrachtung in Strömungsrichtung des Gut- bzw. Luftstromes), beträgt 50 bis 85°, vorzugsweise 60 bis 80°.

Bezeichnet man den Abstand zwischen den Eintrittsstellen des vorgewärmten Gutes in die Kühlluftteilstrom - Leitungen und den Anschlüssen der Kühlluftteilstrom-Leitungen 14, 15 an die Ofenabgasleitung 7 mit a und den Querschnitt jeder der beiden Kühlluftteilstrom-Leitungen 14, 15 mit F, so beträgt das maß a zweckmäßig das 0,4- bis 1,2-fache, vorzugsweise das 0,6- bis 0,9-fache der Quadratwurzel aus der Querschnittsfläche F.

An den Kühlluftteilstrom-Leitungen 14 und 15, nahe ihren Anschlüssen an die Ofenabgasleitung 7, ist bei dem dargestellten Ausführungsbeispiel je ein Brenner 20 bzw. 21 angeordnet. Bezeichnet man den Abstand zwischen den Eintragsstellen des vorgewärmten Gutes (Leitungen 17, 18) und den Brennern 20, 21 mit b (Maße jeweils im Bereich der Achse der Leitungen 14, 15 gemessen), so beträgt dieses Maß b zweckmäßig das 0,5- bis 1,0-fache, vorzugsweise das 0,6- bis 0,8-fache des Maßes a.

Zusätzlich zu den Brennern 20, 21 oder statt dieser Brenner können Brenner — wie bei 22, 23 24 angedeutet — auch in der Ofenabgasleitung 7, vorzugsweise nahe den Einmündungen der Leitungen 14, 15 oder darunter vorgesehen sein.

In den Leitungen 14 und 15 können jeweils unterhalb der Einmündungen der Gutaustragsleitungen 17, 18 den Gutstrom auflösende Ablenkorgane 25, 26 vorgesehen sein.

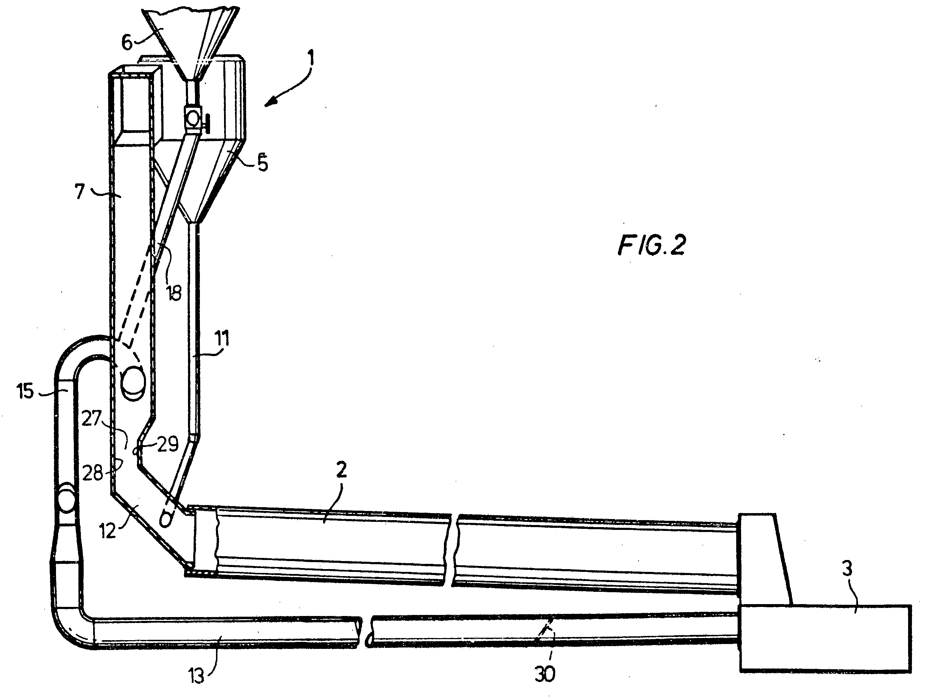

Unterhalb der Einmündungen der Leitungen 14, 15 weist die Ofenabgasleitung 7 eine Querschnittsverengung 27 (vgl. Fig. 2) auf, die auf der Strömungsaußenseite des umgelenkten Ofenabgasstromes durch eine im wesentlichen glatte Wand 28 und auf der Strömungsinnenseite durch eine nach innen eingezogene Wand 29 begrenzt wird.

In der Külluftleitung 13 ist ein Stellorgan 20 zur Veränderung des Strömungswiderstandes vorgesehen.

Die Wirkungsweise der erfindungsgemäßen Anlage ist wie folgt:

Das durch die heißen Gase in mehreren Stufen des vorwärmers 1 vorgewärmte Gut gelangt in zwei Teilströmen durch die Gutaustragsleitungen 17, 18 in die Leitungen 14, 15, die je einen Teilstrom des vom Kühler 3 abgezogenen Kühlluftstromes führen. Auf dem kurzen Weg (Maß a) von den Guteintrittsstellen bis zu den Einmündungen in die Ofenabgasleitung 7 werden die beiden Gutströme in den beiden Kühlluftteilströmen aufgelöst und mit dem über die Brenner 20, 21 zugeführten Brennstoff vermischt. Die beiden in die Ofenabgasleitung 7 an zwei einander etwa diametral gegenüberliegenden Stellen eintretenden Ströme des Brennstoff-Gut-Luft-Gemisches (Pfeile 32, 33) verteilen sich gleichmäßig in dem aufsteigenden Ofenabgasstrom (Pfeile 34) über den ganzen Querschnitt der Ofenabgasleitung 7, so daß in dieser Vorkalzinationszone eine außerordentlich wirkungsvolle und gleichmäßige Übertragung der Wärmeenergie des zusätzlichen Brennstoffes und der Ofenabgase auf das vorzukalzinierende Gut erfolgt.

Das Gut wird dann in bekannter Weise vom Gasstrom den Zyklonen 4 und 5 zugeführt, dort abgeschieden und gelangt hierauf über die Leitungen 10 und 11 in den Drehrohrofen 2.

Die Abwärtsneigung der Kühlluftteilstrom-Leitungen 14, 15 im Bereich der Anschlußstellen der Gutaustragsleitungen 17, 18 sowie der geringe Abstand der Guteintragsstellen von den Einmündungen der Kühlluftteilstrom-Leitungen in die Ofenabgasleitungen gewährleistet bei einem etwaigen Ausfall der Kühlluftzufuhr zu den Leitungen 14, 15, daß das über die Gutaustragsleitungen 17, 18 zugeführte Gut unter der Wirkung seiner Fallenergie in die Ofenabgasleitung 7 gelangt und keine Verstopfung der Leitungen 14 und 15 verursachen kann.

Auf der anderen Seite wird durch die Eintragung des Gutes in die Kühlluftteilstrom-Leitungen 14, 15 eine weitgehende Auflösung der Gutströme im Luftstrom gewährleistet, was — verglichen mit einer unmittelbaren Einführung von Gut und Kühlluft in die Vorkalzinationszone — wesentlich gleichmäßigere und damit bessere Vorkalzinationsbedingungen ergibt.

Die Nähe der Brenner 20, 21 zur Ofenabgasleitung 7 stellt eine zuverlässige Zündung dieser Brenner durch die Hitze der Ofenabgase auch dann sicher, wenn, aus irgendwelchen betrieblichen Gründen die Luft vom Kühler 3 eine zu niedrige Temperatur besitzt. Auf diese Weise ist unter allen Betriebsumständen eine vollständige Verbrennung des zum Zwecke der Vorkalzination zugegebenen zusätzlichen Brennstoffes gewährleistet.

**Patentansprüche**

1. Anlage zur Wärmebehandlung von feinkörnigem Gut, insbesondere zur Herstellung von Zement, mit einem mehrstufigen Zyklonvorwärmer, einem Drehrohrofen, einem Kühler sowie einer von der Ofenabgasleitung zwischen Drehrohrofen und Zyklonvorwärmer gebildeten, mit zusätzlichem Brennstoff versorgten Vorkalzinationszone, wobei eine an den Kühler angeschlossene, zur Vorkalzinationszone führende Kühlluftleitung in mehrere Kühlluftteilstrom-Leitungen aufgeteilt ist, die an verschiedenen Umfangsstellen in die Ofenabgasleitung einmünden, dadurch gekennzeichnet, daß die Gutaustragsleitungen (17, 18) der zweituntersten Zyklonstufe (6) in die Kühlluftteilstrom-Leitungen (14, 15) unmittelbar vor deren Anschlüssen an die Ofenabgasleitung (7) um münden und daß die Kühlluftteilstrom-Leitungen (14, 15) von den Einmündungen der Gutaustragsleitungen (17, 18) bis zu den anschlüssen an die Ofenabgasleitung (7) um einen Winkel ($\alpha$) zwischen 20 und 60° in Strömungsrichtung nach unten gegenüber der Horizontalen geneigt sind.

2. Anlage nach Anspruch 1, dadurch gekennzeichnet, daß die Kühlluftteilstrom-Leitungen (14, 15) von den Einmündungen der Gutaustragsleitungen (17, 18) bis zu den Anschlüssen an die Ofenabgasleitung (7) um einen Winkel ($\alpha$) zwischen 30 und 50° in Strömungsrichtung nach unten gegenüber der Horizontalen geneigt sind.

3. Anlage nach Anspruch 1, dadurch gekennzeichnet, daß die Gutaustragsleitungen (17, 18) der zweituntersten Zyklonstufe (6) und die zugehörigen Kühlluftteilstrom-Leitungen (14, 15) einen in Strömungsrichtung spitzen Winkel ($\beta$) zwischen 50 und 85°, vorzugsweise zwischen 60 und 80°, miteinander einschließen.

4. Anlage nach Anspruch 1, dadurch gekennzeichnet, daß der Abstand (a) zwischen den Einmündungen der Gutaustragsleitungen (17, 18) in die Kühlluftteilstrom-Leitungen (14, 15) und den Anschlüssen dieser Kühlluftteilstrom-Leitungen (14, 15) an die Ofenabgasleitung (7) das 0,4- bis 1,2-fache, vorzugsweise das 0,6- bis 0,9-fache der Quadratwurzel aus dem Querschnitt (F) der Kühlluftteilstrom-Leitungen (14, 15) beträgt.

5. Anlage nach Anspruch 1, dadurch gekennzeichnet, daß zwischen den Einmündungen der Gutaustragsleitungen (17, 18) und den Anschlüssen der Kühlluftteilstrom-Leitungen (14, 15) an die Ofenabgasleitung (7) Einführstellen (Brenner 20, 21) für zusätzlichen Brennstoff vorgesehen sind.

6. Anlage nach den Ansprüchen 4 und 5, dadurch gekennzeichnet, daß der Abstand (b) zwischen den Einmündungen Gutaustragsleitungen (17, 18) und den Einführstellen (Brenner 20, 21) für zusätzlichen Brennstoff das 0,5- bis 1,0-fache, vorzugsweise das 0,6- bis 0,8-fache des genannten Abstandes (a) beträgt.

7. Anlage nach Anspruch 5, dadurch gekennzeichnet, daß in der Ofenabgasleitung (7) nahe den Anschlüssen der Kühlluftteilstrom-Leitungen (14, 15) wenigstens eine Einführstelle (Brenner 22, 23, 24) für weiteren zusätzlichen Brennstoff vorgesehen ist.

8. Anlage nach Anspruch 1, bei der die zweit-unterste Stufe des Zyklonvorwärmers durch einen einzigen Zyklon gebildet wird, dadurch gekennzeichnet, daß sich die Gutaustragsleitung (16) dieses Zyklons (6) in zwei Gutaustragsleitungen (17, 18) verzweigt und an der Verzweigungsstelle ein einstellbares Verteilerorgan (19) angeordnet ist.

9. Anlage nach Anspruch 1, dadurch gekennzeichnet, daß eine unterhalb des Anschlusses der Kühlluftteilstrom-Leitungen (14, 15) vorgesehene Querschnittsverengung (27) der Ofenabgasleitung (7) auf der Strömungsaußenseite des umgelenkten Ofenabgasstromes durch eine im wesentlichen glatte Wand (28) und auf der Strömungsinnenseite durch eine nach innen vorgezogene Wand (29) begrenzt wird.

10. Anlage nach Anspruch 1, dadurch gekennzeichnet, daß in den Kühlluftteilstrom-Leitungen (14, 15) im Bereich der Einmündungen der Gutaustragsleitungen (17, 18) den Gutstrom auflösende Ablenkorgane (25, 26) vorgesehen sind.

**Revendications**

1. Installation de traitement thermique de matière à granulométrie fine, en particulier de production de ciment, comprenant un réchauffeur à cyclone à plusieurs étages, un four tubulaire rotatif, un réfrigérant ainsi qu'une zone de précalcination formée par la partie de la canalisation d'évacuation des gaz du four qui est comprise entre le four tubulaire et le réchauffeur à cyclone et dans laquelle est injecté une complément de carburant, une canalisation d'amenée d'air frais dans la zone de précalcination étant racordée au réfrigérant et étant subdivisée en plusieurs tronçons d'amenée de courants partiels qui débouchent dans la canalisation d'évacuation des gaz du four en différents emplacements de la circonférence de cette dernière, installation caractérisée en ce que les canalisations (17, 18) de décharge de la matière de l'avant-dernier étage du bas du cyclone (6) débouchent dans les tronçons de canalisation (14, 15) d'amenée de courants partiels d'air frais immédiatement audevant du raccord de ces derniers à la canalisation (7) d'évacuation des gaz du four et ces tronçons de canalisation (14, 15) sont inclinés vers le bas sur l'horizontale d'un angle ($\alpha$) ompris entre 20 et 60° dans le sens de circulation entre les embouchures desdites canalisations de décharge de la matière (17, 18) et lesdits raccords à la canalisation (7) d'évacuation des gaz du four.

2. Installation selon la revendication 1, caractérisée en ce que les tronçons de canalisation d'amenée de courants partiels d'air frais (14, 15) sont inclinés vers le bas sur l'horizontale d'un angle ($\alpha$) compris entre 30 et 50° entre les embouchures des canalisations (17, 18) de décharge de la matière et lesdits raccords à la canalisation (7) d'évacuation des gaz du four.

3. Installation selon la revendication 1, caractérisée en ce que les canalisations (17, 18) de décharge de la matière de l'avant-dernier étage du bas du cyclone (6) et les tronçons correspondants de canalisation (14, 15) d'amenée de courants partiels d'air frais inscrivent dans le sens de la circulation un angle aigu ($\beta$) compris entre 50 et 85°, de préférence entre 60 et 80°.

4. Installation selon la revendication 1, caractérisée en ce que la distance (a) comprise entre les embouchures des canalisations (17, 18) de décharge de la matière dans les tronçons de canalisation (14, 15) d'amenée de courants partiels d'air frais et les raccords de ces tronçons de canalisation (14, 15) à la canalisation (7) d'évacuation des gaz du four est égale à 0,4 à 1,2 fois, de préférence à 0,6 à 0,9 fois la racine carrée de la section (F) desdits tronçons de canalisation (14, 15).

5. Installation selon la revendication 1, caractérisée en ce que des points d'introduction (brûleurs 20, 21) du complément de combustible sont disposés entre les embouchures des canalisations (17, 18) de décharge de la matière et les raccords des tronçons de canalisation (14, 15) d'amenée de courants partiels d'air frais à la canalisation (7) d'évacuation des gaz du four.

6. Installation selon l'une des revendications 4 et 5, caractérisée en ce que la distance (b) comprise entre les embouchures des canalisations (17, 18) de décharge de la matière et les points d'introduction (brûleurs 20, 21) du complément de combustible est égale à 0,5 à 1,0 fois, de préférence à 0,6 à 0,8 fois ladite distance (a).

7. Installation selon la revendication 5, caractérisée en ce qu'au moins un point d'introduction (brûleurs 22, 23, 24) d'un autre complément de combustible est disposé dans la canalisation (7) d'évacuation des gaz du four, à proximité des raccords des tronçons de canalisation (14, 15) d'amenée de courants partiels d'air frais.

8. Installation selon la revendication 1, dans laquelle l'avant-dernier étage du bas du réchauffeur à cyclone est formé d'un unique cyclone, caractérisée en ce que la canalisation (16) de décharge de la matière de ce cyclone (6) forme un embranchement prolongé par deux canalisations de décharge (17, 18) et un organe répartiteur réglable (19) est disposé audit embranchement.

9. Installation selon la revendication 1, caractérisée en ce qu'un rétrécissement de section (27) de la canalisation (7) d'evacuation des gaz du four situé au-dessous du raccord des tronçons de canalisation (14, 15) d'amenée de courants partiels d'air frais est délimité du côté extérieur de la circulation du courant dévié des gaz évacués du four par une cloison sensiblement unie (28) et, du côté intérieur de la circulation, par une cloison (29) en retrait vers l'intérieur.

10. Installation selon la revendication 1, caractérisée en ce que dès chicanes (25, 26) destinées à désagréger le courant de matière sont disposées dans les tronçons de canalisation (14, 15) d'amenée de courants partiels d'air frais au voisinage des embouchures des canalisations (17, 18) de décharge de la matière.

**Claims**

1. Apparatus for heat treating fine-grain material, in particular for the production of cement, comprising a multistage cyclone preheater, a rotary kiln, a cooler and a precalcination zone which is formed by the kiln waste gas conduit between rotary kiln and cyclone preheater and is supplied with additional fuel, a cooling air conduit connected to the cooler and leading to the precalcination zone being divided into a plurality of cooling air sub-flow conduits which open at different peripheral locations into the kiln waste gas conduit, characterized in that the material discharge conduits (17, 18) of the second lowermost cyclone stage (6) open into the cooling air sub-flow conduits (14, 15) immediately in front of the connection thereof to the kiln waste gas conduit (7) and that the cooling air sub-flow conduits (14, 15) from the entrances of the material discharge conduits (17, 18) up to the connections to the kiln waste gas conduit (7) are inclined downwardly with respect to the horizontal by an angle ($\alpha$) between 20 and 60° in the direction of flow.

2. Apparatus according to claim 1, characterized in that the cooling air sub-flow conduits (14, 15) from the entrances of the material discharge conduits (17, 18) up to the connections to the kiln waste gas conduit (7) are inclined downwardly with respect to the horizontal by an angle ($\alpha$) between 30 and 50°.

3. Apparatus according to claim 1, characterized in that the material discharge conduits (17, 18) of the second lowermost cyclone stage (6) and the associated cooling air sub-flow conduits (14, 15) enclose an angle ($\beta$) acute in the flow direction between 50 and 85°, preferably between 60 and 80°.

4. Apparatus according to claim 1, characterized in that the spacing (a) between the entrances of the material discharge conduits (17, 18) into the cooling air sub-flow conduits (14, 15) and the connections of said cooling air sub-flow conduits (14, 15) to the kiln waste gas conduit (7) is 0.4 to 1.2 times, preferably 0,6 to 0.9 times, the square root of the cross-section (F) of the cooling air sub-flow conduits (14, 15).

5. Apparatus according to claim 1, characterized in that between the entrances of the material discharge conduits (17, 18) and the connections of the cooling air sub-flow conduits (14, 15) to the gas conduit (7) introduction points (burners 20, 21) for addditional fuel are provided.

6. Apparatus according to claims 4 and 5, characterized in that the spacing (b) between the entrances of the material discharge conduits (17, 18) and the introduction points (burners 20, 21) for additional fuel is 0.5 to 1.0 times, preferably 0.6 to 0.8 times, the aforementioned spacing (a).

7. Apparatus according to claim 5, characterized in that in the kiln waste gas conduit (7) near the connections of the cooling air sub-flow conduits (14, 15) at least one introduction point (burners 22, 23, 24) for further additional fuel is provided.

8, Apparatus according to claim 1, wherein the second-lowermost stage of the cyclone preheater is formed by a single cyclone, characterized in that the material discharge conduit (16) of said cyclone (6) branches into two material discharge conduits (17, 18) and at the branching point an adjustable distributing means (19) is provided.

9. Apparatus according to claim 1, characterized in that a cross-sectional construction (27) of the kiln waste gas conduit (7) provided beneath the connection of the cooling air sub-flow conduits (14, 15), on the flow outside of the deflected kiln waste gas flow is defined by a substantially smooth wall (28) and on the flow inner side is defined by an inwardly projecting wall (29).

10. Apparatus according to claim 1, characterized in that in the cooling air sub-flow conduits (14, 15) in the region of the entrances of the material discharge conduits (17, 18) deflection means (25, 26) breaking up the material flow are provided.

FIG.1

FIG.2

*FIG.3*